# EUROPÄISCHE PATENTSCHRIFT

(11) **EP 0 714 152 B1**
(45) Veröffentlichungstag und Bekanntmachung des Hinweises auf die Patenterteilung: **05.02.2003**
(21) Anmeldenummer: 95810736.9
(22) Anmeldetag: 24.11.1995
(51) Int. Cl.: H01R 13/453

(54) **Elektrische Steckverbindung**
Electrical connection
Connexion électrique

(30) Priorität: 25.11.1994 CH 356394
(43) Veröffentlichungstag der Anmeldung: 29.05.1996
(73) Patentinhaber: MULTI-CONTACT AG, CH-4123 Allschwil (CH)
(72) Erfinder: Hengel, Christian, F-68720 Hochstatt (FR); Christ, Alain, F-68300 Village-Neuf (FR); Tischmacher, Christian, F-68800 Leimbach (FR)
(74) Vertreter: Isler & Pedrazzini AG

(56) Entgegenhaltungen:
- EP-A- 0 528 735
- FR-A- 2 654 265
- US-A- 4 203 640

## Beschreibung

### TECHNISCHES GEBIET

Die vorliegende Erfindung bezieht sich auf eine elektrische Steckverbindung gemäss dem Oberbegriff des Anspruchs 1 und insbesondere auf eine Steckverbindung zum schnellen Aufladen der Batterien elektrischer Fahrzeuge innerhalb nur weniger Minuten. Dabei kommen Stromstärken von 250 Ampère und Spannungen von 630 Volt zum Einsatz, welche hinlänglich hoch sind, um als gefährlich eingestuft zu werden. Aus diesem Grund wurde schon alles versucht, eine leicht handhabbare Steckverbindung zu schaffen, welche ihrem Benutzer zusätzlich absolute Sicherheit gewährleistet. Insbesondere sollen die aktiven Kontakte der Steckverbindung berührungssicher abgedeckt und sogar mit einem Werkzeug nur schwer zugänglich sein.

### STAND DER TECHNIK

Aus der US 4203640 A ist eine elektrische Steckverbindung der eingangs genannten Art bekannt. Bei dieser erfolgt das Aufeinanderstecken von Buchsenteil und Steckerteil in drei Phasen: in einer ersten Phase werden Stecker und Buchsenteil nur so weit axial aufeinander zubewegt, bis die vordere Scheibe des Buchsenteils mit einem Nocken in eine Vertiefung in der vorderen Scheibe des Steckerteils eingreift. Die beiden Scheiben werden dadurch drehgekoppelt. In der zweiten Phase werden Steckerteil und Buchsenteil relativ zueinander verdreht, bis die Registerlochungen in den Scheiben in Überdekkung mit den Stecker- bzw.den Buchsenkontakten kommen.

In der dritten Phase werden die beiden Steckverbindungsteile vollständing in Axialrichtung zusammengeschoben. Nachteilig an der bekannten Konstruktion ist zum einen die notwendige Drehung von Steckerteil und Buchsenteil gegeneinander (in Phase zwei)und zum andern, dass die drehbaren Scheiben bei gelöster Steckverbindung frei zugänglich und ohne Schwierigkeiten mit einem einfachen Werkzeug oder sogar von Hand in ihre die Kontakte freigebene Drehstellung verdreht werden können, so dass nur ein eingeschränkter Berührungsschutz besteht. Die Scheiben dienen denn auch vornehmlich dem Schutz der Kontakte gegen Verschmutzung.

Aus der EP 0528735 A1 ist eine Steckverbindung bekannt, bei welcher am Buchsenteil zwei drehbare Scheiben mit Registerlochungen vorgesehen sind. Die beiden Scheiben lassen sind in mehreren Drehstellungen relativ zueinander fixieren, in jeder dieser Relativstellungen aber auch noch nach Lösen einer Verriegelung gemeinsam verdrehen und dadurch mit ihren Registerlochungen in Überdeckung mit den Buchsenkontakten bringen. Das Lösen der Verriegelung erfolgt bei Einstecken des Stekkerteils in das Buchsenteil. Danach muss auch hier wieder das Steckerteil relativ zum Buchsenteil gedreht werden, wobei die beiden Scheiben von den Steckerstiften mitgenommen und in Überdeckung mit den Buchsenkontakten gebracht werden. Erst danach kann das Steckerteil vollständig axial in das Buchenteil eingeschoben werden. Die Veriegelung wird durch einen federbelasteten Ring erreicht, der mit einem einfachen Werkzeug wie z.B. einem Schraubenzieher, betätigt und die Verriegelung dadurch gelöst werden kann. Für die Kontakte am Stekkerteil scheint gar kein besonderer Berührungsschutz vorgesehen zu sein, dass heisst das Steckerteil ist frontseitig offen.

### DARSTELLUNG DER ERFINDUNG

Der Erfindung liegt die Aufgabe zugrunde, eine elektrische Steckverbindung insbesondere zum Schnelladen von Elektroautos anzugeben, welche bei einfacher Handhabbarkeit sehr berührungssicher und zudem gegen Verschmutzung optimal geschützt ist. Diese Aufgabe wird erfindungsgemäss gelöst durch eine Steckverbindung mit den Merkmalen des Patentanspruchs 1.

Beim Gegenstand der Erfindung ist zum Herstellen der Verbindung zwischen Stecker- und Buchsenteil keine Drehbewegung sondern eine reine Axialbewegung erforderlich. Die drehbaren Scheiben sind jeweils die inneren Scheiben, welche durch die äusseren Scheiben abgedeckt und dadurch nicht ohne weiteres zugänglich sind.

Vorteilhafte Ausgestaltungen und Weiterbildungen der Erfindung sind in den abhängigen Ansprüchen angegeben und ergeben sich im Übrigen aus der nachfolgenden Beschreibung eines Ausführungsbeispiels unter Bezugnahme auf die beigefügten Zeichnungen.

### KURZE ERLÄUTERUNG DER FIGUREN

Es zeigen
- Fig. 1: Ein Auto an einer "Elektro-Tankstelle"
- Fig. 2: Im Schnitt (I-I in Fig. 3) das Steckerteil einer erfindungsgemässen Steckverbindung
- Fig. 3: die Vorderansicht des Steckerteils von Fig. 2
- Fig. 4: im Schnitt (II-II in Fig. 5) das zum Steckerteil von Fig. 2 und 3 passende Buchsenteil
- Fig. 5: die Vorderansicht des Buchsenteils von Fig. 4 und
- Fig. 6: schematisch eine alternative Ausbildung des Buchsenteils.

### WEGE ZUR AUSFÜHRUNG DER ERFINDUNG

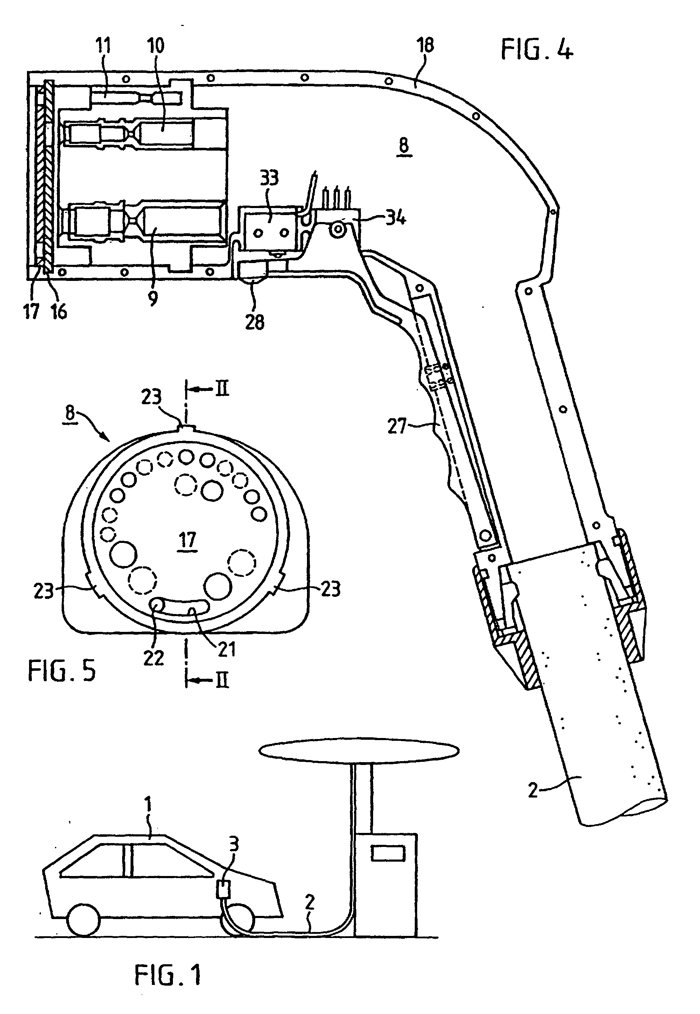

Fig. 1 zeigt ein Elektrofahrzeug 1 an einer Elektro-"Tankstelle". Mittels eines Kabels 2 ist das Fahrzeug 1 mit einer "Ladesäule" verbunden, wobei am Ende des Kabels 2 ein "Stecker" (im folgenden als Buchsenteil bezeichnet!) und am Fahrzeug 1 ein entsprechender "Stecksockel" (im folgenden als Steckerteil bezeichnet!) fest montiert sind. Beide Teile bilden zusammen eine Steckverbindung 3, wie sie im folgenden näher beschrieben wird.

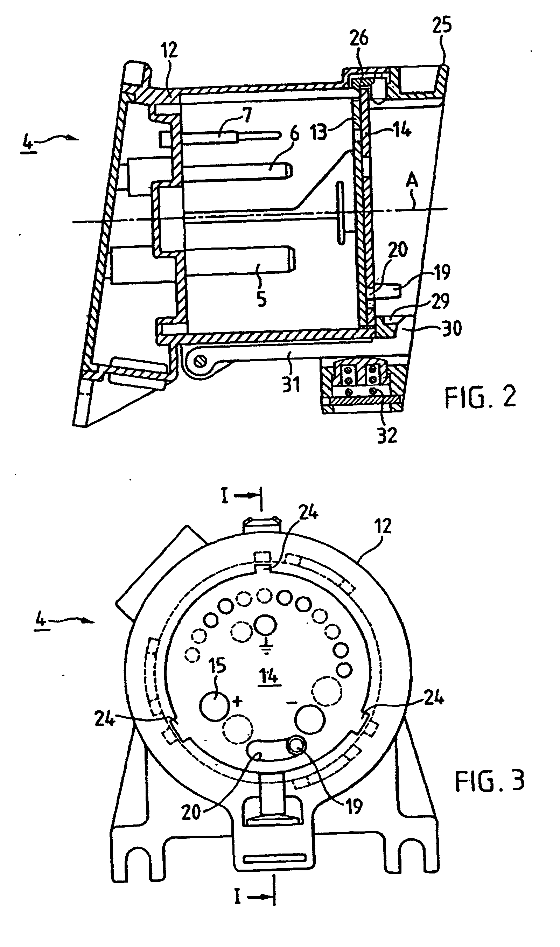

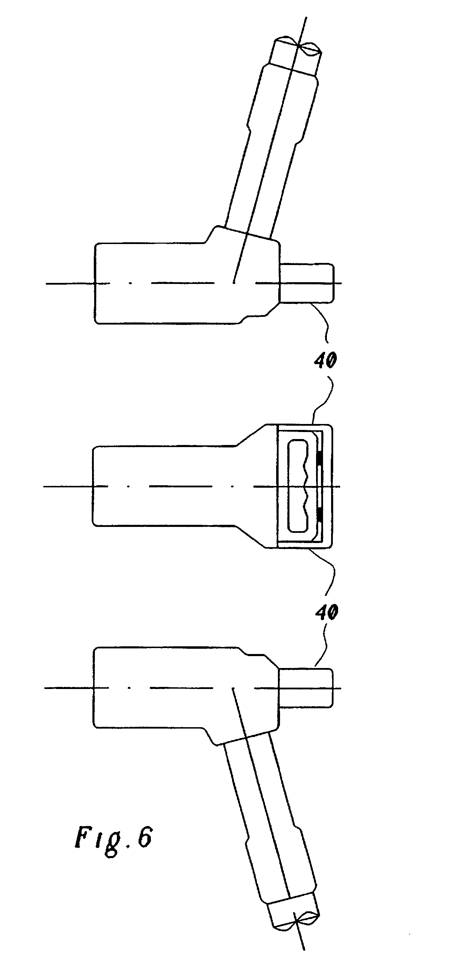

Das in den Figuren 2 und 3 dargestellte Steckerteil 4 ist am Fahrzeug fest montierbar ausgebildet. Es heisst deshalb hier Steckerteil, weil es mit Steckerstiften 5, 6, 7 versehen ist. Im Gegensatz dazu ist das im herkömmlichen Sinne eher als "Stecker" aufzufassende Buchsenteil 8 am-Ende des Kabels 2 gemäss den Figuren 4 und 5 intern mit Buchsen 9, 10 und 11 ausgerüstet.

Die dicken Steckerstifte 5 und die dicken Buchsen 9 dienen zur Schnelladung, die etwas dünneren 6 bzw. 10 einer längeren, schonenden Aufladung z.B. über Nacht. Über die dünnen Steckerstifte 7 und Buchsen 11 können Steuersignale zur Steuerung des Ladevorgangs übertragen werden.

Das Steckerteil 4 weist ein Gehäuse 12 auf, welches alle Strom und Spannung führenden Teile wie die Steckerstifte 5 - 7 umfasst und welches frontseitig durch zwei hintereinanderliegende Scheiben 13 und 14 verschlossen ist.

Die beiden Scheiben 13 und 14 sind entsprechend der Anordnung der Steckerstifte 5 - 7 in übereinstimmender Weise mit einer Registerlochung versehen, wie dies insbesondere in Fig. 3 zu erkennen ist. Ein Loch dieser Lochung ist in Fig. 3 mit 15 bezeichnet.

Beide Scheiben 13 und 14 sind im Gehäuse 12 in Richtung der Steckerstifte 5 - 7 gegen die Wirkung einer nicht dargestellten Feder axial (Achse A) verschiebbar, wobei ihnen entlang des Verschiebeweges durch eine Zwangsführung eine definierte Drehstellung aufgezwungen wird. In ihrer in Fig. 2- dargestellten Stellung (Schliessstellung) sind sie relativ so zueinander gedreht, dass sich ihre Registerlochungen bzw. Löcher 15 gegenseitig nicht überdecken und die Frontseite des Gehäuses 12 daher verschlossen ist.

Der Verschiebeweg der beiden Scheiben 13 und 14 ist in drei Abschnitte unterteilt. Im ersten, sich an die Schliessstellung anschliessenden Abschnitt bleibt die Drehstellung der beiden Scheiben, die sie in der Schliessstellung einnehmen, erhalten. Im nachfolgenden mittleren Abschnitt, welcher bis kurz vor die Spitzen der Steckerstifte 5, 6 reicht, wird der inneren Scheibe 13 (und nur dieser) ein Drehung aufgezwungen in deren Folge die Registerlochungen vollständig zur Deckung kommen. Derart gegeneinander gedreht können die Scheiben nachfolgend im dritten Abschnitt ohne weiter Relativdrehung über die Steckerstifte 5 - 7 bis an die Rückwand des Gehäuses 12 geschoben werden.

Im Buchsenteil 8 (Fig. 4, 5) sind den Scheiben 13, 14 entsprechende Scheiben 16 und 17 vorgesehen, welche das Gehäuse 18 des Buchsenteils 8 frontseitig verschliessen und welche die gleichen Registerlochungen wie die Scheiben 13 und 14 aufweisen. Die äussere Scheibe 17 ist fest montiert, die innere 16 relativ dazu sowie gegen die Wirkung einer Feder (nicht dargestellt) verdrehbar. Die Feder hält die innere Scheibe 16 in einer solchen Drehstellung relativ zur Scheibe 17, dass sich die Registerlochungen gegenseitig nicht überdecken, das Buchsenteil 8 damit fronstseitig geschlossen ist.

Zum Herstellen einer Verbindung zwischen den beiden Steckverbindungsteilen wird das Buchsenteil 8 in das Steckerteil 4 eingeführt, so dass die Steckerstifte 5 -7 in Eingriff in die Buchsen 9 - 11 kommen. Beim Einführen des Buchsenteils 8 in das Steckerteil 4 werden durch das Buchsenteil die beiden Scheiben 13, 14 nach hinten gedrängt, wobei im oben erläuterten mittleren Abschnitt die Scheibe 13 eine Drehung ausführt, welche ihre Registerlochungen in Überdeckung mit denen der nicht drehenden Scheibe 14 bringt.

An der Scheibe 13 ist ein Nocken 19 vorgesehen, welcher nach vorn durch ein Langloch 20 in der vorderen Scheibe 14 vorsteht. In der vorderen Scheibe 17 des Buchsenteils 8 ist ein entsprechendes Langloch 21 vorgesehen und in der Scheibe 16 dahinter ein Loch 22. Beim Einführen des Buchsteils 8 in das Steckerteil 4 greift der an der sich drehenden Scheibe 13 angeformte Nocken 19 durch das Langloch 21 in dieses Loch 22 ein und dreht die Scheibe 16 mit. Dadurch kommen die Registerlochungen in den Scheiben 16 und 17 des Buchsenteils 8 ebenfalls in Überdeckung, was den Weg für die Steckerstifte 5 - 7 in die Buchsen 9 - 11 freimacht.

Aus der vorstehenden Beschreibung ergibt sich, dass die Frontseiten der beiden Steckverbindungsteile 4 und 8 stets sicher verschlossen sind, wenn diese voneinander getrennt sind, und sich erst öffnen, wenn bereits ein gegenseitiger Eingriff vorhanden ist. Für das Trennen der beiden Teile voneinander gilt natürlich dasselbe.

Wegen des Nockens 19 muss das Buchsenteil 8 immer auf die gleiche Art, d.h. in stets derselben relativen Drehstellung in das Steckerteil 4 eingeführt werden. Durch Ausbildung des Steckerteils 4 und des Buchsenteils 8 wie Schloss und Schlüssel kann das aber einfach erzwungen werden. Am Umfang des Buchsenteils 8 können hierzu vorzugsweise untereinander nicht identische Nocken oder Rippen 23 und am Steckerteil 4 entsprechende Nuten 24 vorgesehen sein.

Massnahmen zur weiteren Erhöhung der Sicherheit der erfindungsgemässen Steckverbindung, namentlich eine Verriegelung der verschiebbaren Scheiben 13, 14 sowie eine Eingriffsverrastung der beiden Steckverbindungsteile, werden im folgenden erläutert.

Zur Verrieglung der beiden verschiebbaren Scheiben 13 und 14 in ihrer Schliessstellung sind im die Frontseite des Steckerteils umgebenden Kragen 25 im Bereich der Nuten 24 mehrere federbelastete Riegel 26 vorgesehen, welche die Scheibe 14 jeweils mit einer Nase hintergreifen. Damit die Scheiben 13 und 14 zurückgeschoben werden können, muss diese Verriegelung zunächst gelöst werden und zwar bei allen Riegeln gleichzeitig. Dies ist ausser mit einem speziellen Werkzeug praktisch unmöglich, zumal die Riegel 26 im Kragen 25 etwas versteckt und damit schwer zugänglich angeordnet sind. Mit dem Buchsenteil 8 als "Werkzeug" bzw. Passender "Schlüssel" erfolgt die Entriegelung beim Einführen -in das Steckerteil 4 hingegen automatisch. Die beschriebene Verriegelung stellt sicher, dass von Hand und selbst mit einem Werkzeug wie einem Schraubenzieher oder dergleichen, die Scheiben 13 und 14 nicht zurückgeschoben und damit die Steckerstifte freigelegt werden können.

Am Buchsenteil 8 ist eine entsprechende Verklinkung nicht vorgesehen, doch ist auch hier ein Öffnen der Frontseite nur schwer möglich, da hierzu die hintere Scheibe 16 gedreht werden muss.

Zwecks Herstellung einer Eingriffsverrastung zwischen Stekker- 4 und Buchsenteil 8 im zusammengesteckten Zustand ist am Buchsenteil 8 ein erster federbelasteter Rasthebel 27 vorgesehen, welcher an seinem oberen bzw. vorderen Ende einen ersten Rastnocken 28 aufweist. Dieser erste Rastnocken 28 greift im Steckerteil 4 im zusammengesteckten Zustand in eine mit 29 bezeichnete Rastvertiefung ein, welche hinter einem zweiten Rastnocken 30 am vorderen Ende eines zweiten Rasthebels 31 unten am Steckerteil 4 ausgebildet ist. Der zweite Rasthebel 31 steht ebenfalls unter der Wirkung von Federn 32.

Zur Erleichterung seiner Handhabung ist das Buchsenteil 8 mit einer Art Revolvergriff versehen, wobei der erste Rasthebel 27 den "Abzugshebel" bildet. Durch Betätigen des ersten Rasthebels 27 wird der Rastnocken 28 an seinem vorderen Ende angehoben und ausser Eingriff mit der Rastvertiefung 29 gebracht. Derart lässt sich das Buchsenteil 8 leicht in das Steckerteil 4 einführen bzw. aus diesem wieder herausziehen. Kabelabgang und Handgriff fallen bei dieser Ausführung zusammen. Insbesondere bei dickeren Kabeln, welche sich mit der Hand nicht mehr einfach umfassen lassen, kann es von Vorteil sein, Handgriff und Kabelabgang voneinander zu trennen. So könnte beispielsweise das Kabel wie in Fig. 4 schräg von der Axialrichtung (Einsteckrichtung) der Steckverbindung weg geführt, ein Handgriff 40 mit einem Rasthebel dagegen jedoch auf der Achse selbst angeordnet werden, wie dies Fig. 6 schematisch zeigt. Bei einer der derartigen Ausführungsform kann der Kabelabgang alternativ auch nach oben gewählt werden, wie dies im oberen Teil von Fig. 6 dargestellt ist. Das Buchsenteil ist hier allerdings nicht einfach um 180 gedreht, weil dies die Kontaktanordnung am Steckerteil nicht zulässt.

Mit 33 ist in Fig. 4 ein im Buchsenteil 8 eingebauter Mikroschalter mit federbelasteter Schaltstange bezeichnet, welcher auf die Schwenkstellung des ersten Rasthebels 27 reagiert. Er liefert zur Auswertung in einer Ladesteuerung ein Freigabesignal, wenn er in einer mittleren Stellung ist. Diese nimmt er nur dann ein, wenn das Buchsenteil 4 in das Steckerteil 8 vollständig eingesteckt und der Rastnocken 28 am Rasthebel 27 in der Rastvertiefung 29 des Steckteils 4 ruht. Wenn das Stecker- 4 und das Buchsenteil 8 voneinander getrennt sind, ist der Mikroschalter 33 ganz entlastet und liefert kein Freigabesignal. Umgekehrt ist seine Schaltstange vollständig eingedrückt, wenn sich die beiden Rastnocken 28 und 29 übereinander, d.h. in derselben Axialebene befinden, wobei ebenfalls kein Freigabesignal erzeugt wird. Dies stellt sicher, dass das erwähnte Freigabesignal nur dann generiert wird, wenn die beiden Steckverbindungsteile 4 und 8 wirklich sauber und vollständig auf- bzw. ineinander gesteckt und durch die Verrastung in dieser Stellung gesichert sind.

Die Verrastung kann während des Ladevorgangs zusätzlich durch eine Blockierung des ersten Rasthebels 27 gesichert werden. Für eine derartige Blockierung ist ein Elektromagnet 34 im Buchsenteil vorgesehen, welcher einen beweglichen Anker aufweist. Bei Anzug des Elektromagneten 34 wird der Anker in Eingriff mit dem ersten Rasthebel 27 gebracht. Der Elektromagnet 34 wird z.B. durch die Ladesteuerung-gesteuert.

Der zweite durch die Federn 32 belastete Rasthebel 31 ist schliesslich dazu vorgesehen, eine Trennung der beiden Steckverbindungsteile 4,8 zu ermöglichen, wenn auf diese eine hohe Trenn- oder Abzugskraft wirkt. Dazu- kann es z.B. kommen, wenn der Benutzer das Lösen der Steckverbindung vor dem Losfahren mit dem Elektroauto vergisst. Durch entsprechende Wahl der Federn 32 kann diese Art der Zwangslösung auf hohe Kräfte beispielsweise grösser 500 Newton begrenzt werden.

## Patentansprüche

1. Elektrische Steckverbindung mit einem Stecker- (4) und einem Buchsenteil (8), welche jeweils ein Gehäuse (12,18) aufweisen, in welchem die Stecker- (5 - 7) bzw. Buchsenkontakte (9 - 11) angeordnet sind, mit folgenden Merkmalen:
- die Frontseiten beider Gehäuse sind mit Scheiben (13,14,16) verschlossen, welche jeweils eine der Anordnung der Stecker- bzw. der Buchsenkontakte entsprechende Registerlochung (15) aufweisen;
- am Buchsenteil (8) ist eine Scheibe (16) vorgesehen, welche gegen die Wirkungen einer Feder drehbar ist und zwar zwischen einer ersten Drehstellung, in der sich ihre Registerlochung mit den Buchsenkontakten überhaupt nicht überdeckt und einer zweiten Drehstellung, in der sich die Registerlochung mit den Buchsenkontakten vollständig überdeckt;
- am Steckerteil sind zwei Scheiben vorgesehen, wobei eine der beiden Scheiben (13) gegen die Wirkungen einer Feder drehbar ist und zwar zwischen einer ersten Drehstellung, in der sich ihre Registerlochung mit den Steckerkontakten (5-7) und der Registerlochung in der anderen Scheibe (14) überhaupt nicht überdeckt und einer zweiten Drehstellung, in der sich ihre Registerlochung mit den Steckerkontakten (5-7) und der Registerlochung in der anderen Scheibe (14) vollständig überdeckt;
- im Gehäuse (12) des Steckerteils (4) sind die beiden Scheiben (13,14) unter Einwirkung des Buchsenteils (8) beim Aufeinanderstecken von Stecker- und Buchsenteil aus einer Schliessstellung gegen eine Federkraft ins Gehäuseinnere hinein bis über die Steckerkontakte (5-7) verschiebbar,;
- an einer drehbaren Scheibe (13) eines der beiden Steckverbindungsteile (4) ist ein Nocken (19) vorgesehen, welcher beim Zusammenstecken der beiden Teile (4,8) in ein Loch (22) in einer drehbaren Scheibe (16) im anderen Teil (8) eingreift;
- die Gehäuse (12,18) des Stecker- und des Buchsenteils (4,8) sind zum gegenseitigen Eingriff ausgebildet, welcher besteht, sobald bzw. solange sich die Registerlochungen in den Scheiben mit den Stecker- und den Buchsenkontakten auch nur teilweise überdecken;
**dadurch gekennzeichnet, dass**:
- auch die Frontseite des Buchsenteils (8) ist mit zwei Scheiben (16,17) verschlossen;
- sowohl am Stecker- als auch am Buchsenteil (4,8) ist jeweils die innere Scheibe (13,16) drehbar;
- im Steckerteil (4) führt die innere Scheibe (13) beim axialen Aufeinanderstecken von Stecker- und Buchsenteil (4,8) zwangsweise eine Rotation von ihrer ersten in ihre zweite Drehstellung aus;
- der Nocken (19) ist an der inneren, drehbaren Scheibe (13) im Steckteil (4) vorgesehen und das Loch (22) in der inneren drehbaren Scheibe (16) des Buchsenteils (8).

2. Steckverbindung nach Anspruch 1, **dadurch gekennzeichnet, dass** das Steckerteil und das Buchsenteil bezüglich ihres gegenseitigen Eingriffs wie Schloss und Schlüssel zueinanderpassen, wobei vorzugsweise am Umfang des eingreifenden Teils Nocken (23) und an einer Innenwand des anderen Teils entsprechende Nuten (24) ausgebildet sind.

3. Steckverbindung nach Anspruch 1 oder 2, **dadurch gekennzeichnet, dass** die beiden verschiebbaren Scheiben im Steckerteil in ihrer Schliessstellung bezüglich dieser Verschiebung verriegelt sind, welche Verriegelung durch das Buchsenteil beim Zusammenstecken von Stecker- und Buchsenteil aufgehoben wird.

4. Steckverbindung nach Anspruch 3, **dadurch gekennzeichnet, dass** zur Verriegelung der beiden Scheiben im Steckerteil mehrere, von aussen vorzugsweise nur schwer zugängliche Riegel (26) vorgesehen sind, und dass die Aufhebung dieser Verriegelung das gleichzeitige Entriegeln aller Riegel erfordert.

5. Steckverbindung nach einem der Ansprüche 1 bis 4, **dadurch gekennzeichnet, dass** die Verschiebung der beiden Scheiben im Steckerteil aus der Schliessstellung heraus über eine gewisse Wegstrecke hinweg anfänglich noch ohne Drehung der drehbaren Scheibe erfolgt.

6. Steckverbindung nach einem der Ansprüche 1 bis 5, **dadurch gekennzeichnet, dass** eine gegenseitige Verrastung von Stekker- und Buchsenteil im zusammengesteckten Zustand vorgesehen ist, welche von Hand durch Betätigen eines federbelasteten Rasthebels (27) herstellbar und auch wieder lösbar ist.

7. Steckverbindung nach Anspruch 6, **dadurch gekennzeichnet, dass** ein Sensorschalter vorgesehen ist, welche bei erfolgter Verrastung ein elektrisches Freigabesignal erzeugt, wobei der Sensorschalter vorzugsweise ein Mikroschalter (33) und auf die Stellung des Rasthebels (27) sensitiv ist.

8. Steckverbindung nach Anspruch 6 oder 7, **dadurch gekennzeichnet, dass** Mittel, insbesondere ein Elektromagnet (34) mit beweglichem Anker, zur Blockierung des Rasthebels (27) in seiner Raststellung vorgesehen ist.

9. Steckverbindung nach Anspruch 8, **dadurch gekennzeichnet, dass** die Verrastung bei einer vorgegebenen hohen Abzugskraft auch ohne Betätigen des Rasthebels (27) sowie selbst bei blockiertem Rasthebel (27) lösbar ausgebildet ist.

10. Steckverbindung nach einem der Ansprüche 1 bis 9, **dadurch gekennzeichnet, dass** das Steckerteil (4) ortsfest montierbar und das Buchsenteil (8) als ein mit einem Kabel (2) verbindbares, bewegliches Teil ausgebildet ist und vorzugsweise einen mit der Hand leicht erfassbaren Handgriff umfasst.

## Claims

1. Electrical plug-in connection with a plug part (4) and a socket part (8), which in each case have a housing (12, 18), in which the plug contacts (5 - 7) and socket contacts (9 - 11) are arranged, with the following features:
- the front sides of both housings are closed by discs (13, 14, 16), which in each case have punched register holes (15) corresponding to the arrangement of the plug contacts and socket contacts;
- provided on the socket part (8) is a disc (16) which is rotatable against the actions of a spring, to be precise between a first rotational position, in which its punched register holes are not congruent at all with the socket contacts, and a second rotational position, in which the punched register holes are entirely congruent with the socket contacts;
- provided on the plug part are two discs, one of the two discs (13) being rotatable against the actions of a spring, to be precise between a first rotational position, in which its punched register holes are not congruent at all with the plug contacts (5-7) and the punched register holes in the other disc (14), and a second rotational position, in which its punched register holes are entirely congruent with the plug contacts (5-7) and the punched register holes in the other disc (14);
- in the housing (12) of the plug part (4), the two discs (13, 14) are displaceable under the effect of the socket part (8) when the plug part and socket part are plugged onto each other, from a closed position against a spring force into the interior of the housing until they are over the plug contacts (5-7);
- provided on a rotatable disc (13) of one of the two plug-in connection parts (4) is a cam (19), which, when the two parts (4, 8) are plugged together, engages in a hole (22) in a rotatable disc (16) in the other part (8);
- the housings (12, 18) of the plug part (4) and of the socket part (8) are designed for mutual engagement, which exists as soon as and for as long as the punched register holes in the discs are evenly only partly congruent with the plug contacts and the socket contacts;
**characterized in that**:
- the front side of the socket part (8) is also closed by two discs (16, 17);
- both on the plug part (4) and on the socket part (8), the inner disc (13, 16) is in each case rotatable;
- in the plug part (4), the inner disc (13) is made to perform a rotation from its first rotational position into its second rotational position when the plug part (4) and socket part (8) are axially plugged onto each other;
- the cam (19) is provided on the inner, rotatable disc (13) in the plug part (4) and the hole (22) is provided in the inner rotatable disc (16) of the socket part (8).

2. Plug-in connection according to Claim 1, **characterized in that** the plug part and the socket part fit each other with respect to their mutual engagement like a lock and key, preferably with cams (23) being formed on the circumference of the engaging part and corresponding grooves (24) being formed on the inner wall of the other part.

3. Plug-in connection according to Claim 1 or 2, **characterized in that** the two displaceable discs in the plug part are locked in their closed position with respect to this displacement, which locking is overcome by the socket part when the plug part and socket part are plugged together.

4. Plug-in connection according to Claim 3, **characterized in that**, for locking the two discs, a plurality of bolts (26), which are preferably only accessible with difficulty from the outside, are provided and **in that** overcoming of this locking requires simultaneous unlocking of all these bolts.

5. Plug-in connection according to one of Claims 1 to 4, **characterized in that** the displacement of the two discs in the plug part from the closed position initially takes place over a certain distance without rotation of the rotatable disc.

6. Plug-in connection according to one of Claims 1 to 5, **characterized in that** mutual latching engagement of the plug part and socket part, which can be established and also released again manually by actuating a spring-loaded latching lever (27), is provided in the plugged-together state.

7. Plug-in connection according to Claim 6, **characterized in that** a sensor switch which generates an electrical enabling signal when latching engagement has taken place is provided, the sensor switch preferably being a microswitch (33) and being sensitive to the position of the latching lever (27).

8. Plug-in connection according to Claim 6 or 7, **characterized in that** means, in particular an electromagnet (34) with a movable armature, is provided for blocking the latching lever (27) in its latching position.

9. Plug-in connection according to Claim 8, **characterized in that** the latching engagement is designed to be releasable even without actuation of the latching lever (27), and even when the latching lever (27) is blocked, when there is a predetermined high pulling-off force.

10. Plug-in connection according to one of Claims 1 to 9, **characterized in that** the plug part (4) can be mounted in a fixed place and the socket part (8) is designed as a movable part which can be connected to a cable (2) and preferably comprises a handle which can be easily grasped with the hand.

## Revendications

1. Liaison électrique enfichable dotée d'une pièce (4) formant fiche et d'une pièce (8) formant douille qui présentent chacune un boîtier (12, 18) dans lequel sont disposées les contacts respectifs à fiche (5 à 7) et à douille (9 à 11), et présentant les caractéristiques suivantes:
- les côtés frontaux des deux boîtiers sont fermés par des plaques (13, 14, 16) qui présentent chacune des trous de repérage (15) dont l'agencement correspond à l'agencement des contacts respectifs de la fiche et de la douille;
- sur la partie (8) formant douille est prévue une plaque (16) qui peut tourner en opposition à l'action d'un ressort, et ce entre une première position de rotation dans laquelle ces trous de repérage ne recouvrent absolument pas les contacts de douille et une deuxième position de rotation dans laquelle les trous de repérage recouvrent complètement les contacts de la douille;
- sur la partie formant fiche sont prévues deux plaques, l'une des deux plaques (13) pouvant tourner en opposition à l'action d'un ressort et ce entre une première position de rotation dans laquelle ces trous de repérage ne recouvrent absolument pas les contacts de fiches (5 à 7) et les trous de repérage de l'autre plaque (14) et une deuxième position de rotation dans laquelle ces trous de repérage recouvrent complètement les contacts de fiche (5 à 7) et les trous de repérage de l'autre plaque (14);
- dans le boîtier (12) de la partie (4) formant fiche, les deux plaques (13, 14) peuvent coulisser sous l'action de la partie (8) formant douille lors de l'enfichage de la partie formant fiche et de la partie formant douille, depuis une position de fermeture, en opposition à une force élastique pour pénétrer à l'intérieur du boîtier jusqu'au-dessus des contacts de fiches (5 à 7) ;
- sur une plaque rotative (13) de l'une (4) des deux parties de la liaison enfichable est prévue une came (19) qui, lorsque les deux parties (4, 8) sont enfichées l'une dans l'autre, s'engage dans un trou (22) ménagé dans une plaque rotative (16) de l'autre partie (8),
- les boîtiers (12, 18) de la partie formant fiche et de la partie formant douille (4, 8) sont configurés de façon à s'engager mutuellement, cet engagement existant dès que ou aussi longtemps que les trous de repérage ménagés dans les plaques recouvrent, même seulement en partie, les contacts de fiches et de douilles;
**caractérisée en ce que**
- le côté frontal de la partie (8) formant douille est également fermé par deux plaques (16, 17);
- la plaque intérieure (13, 16) respective de la partie formant fiche et de la partie formant douille (4, 8) peut tourner;
- dans la partie (4) formant fiche, la plaque intérieure (13) exécute obligatoirement une rotation depuis sa première jusque dans sa deuxième position lors de l'enfichage axial mutuel de la partie formant fiche et de la partie formant douille (4, 8); et
- la came (19) est prévue sur la plaque intérieure rotative (13) de la partie (4) formant fiche et le trou (22) dans la plaque intérieure rotative (16) de la partie (8) formant douille.

2. Liaison enfichable selon la revendication 1, **caractérisée en ce qu'**en ce qui concerne leur engagement mutuel, la partie formant fiche et la partie formant douille sont adaptées l'une à l'autre à la manière d'une serrure et d'une clé, des cames (23) étant réalisées de préférence à la périphérie de la partie qui s'engage et une rainure correspondante (24) sur une paroi intérieure de l'autre partie.

3. Liaison enfichable selon la revendication 1 ou 2, **caractérisée en ce que** dans leur position de fermeture, les deux plaques coulissantes de la partie formant fiche sont empêchées de coulisser par un verrouillage qui est supprimé par la partie formant douille lorsque la partie formant fiche et la partie douille sont enfichées l'une dans l'autre.

4. Liaison enfichable selon la revendication 3, **caractérisé en ce que** plusieurs verrous (26), de préférence difficilement accessible de l'extérieur, sont prévus dans la partie formant fiche pour le verrouillage des deux plaques, et **en ce que** la suppression de ces verrouillages nécessite le déverrouillage simultané de tous les verrous.

5. Liaison enfichable selon l'une des revendications 1 à 4, **caractérisée en ce que** le coulissement des deux plaques dans la pièce formant fiche hors de la position de fermeture s'effectue sur un certain parcours initial sans rotation des plaques rotatives.

6. Liaison enfichable selon l'une des revendications 1 à 5, **caractérisée en ce qu'**un encliquetage mutuel de la partie formant fiche de la partie formant douille est prévu lorsqu'elles sont en position enfichée l'une dans l'autre, et peut être établi à la main par actionnement d'un levier d'encliquetage (27) sollicité par ressort, et peut également être libéré.

7. Liaison enfichable selon la revendication 6, **caractérisée en ce qu'**elle présente un commutateur-capteur qui crée un signal électrique de libération lorsque l'encliquetage a été réalisé, le commutateur-capteur étant de préférence un micro-commutateur (33) sensible à la position du levier d'encliquetage (27).

8. Liaison enfichable selon la revendication 6 ou 7, **caractérisée en ce qu'**elle présente des moyens, en particulier un électroaimant (34) à induit mobile, pour le blocage du levier d'encliquetage (27) dans sa position encliquetée.

9. Liaison enfichable selon la revendication 8, **caractérisée en ce que** l'encliquetage est configuré de manière à être libéré en cas de présence d'une force de traction élevée prédéterminée, sans actionnement du levier d'encliquetage (27), même lorsque le levier d'encliquetage (27) est bloqué.

10. Liaison enfichable selon l'une des revendications 1 à 9, **caractérisée en ce que** la partie (4) formant fiche peut être montée en position fixe et **en ce que** la partie (8) formant douille est configurée comme pièce mobile apte à être reliée à un câble (2) et comprend de préférence une poignée qui peut être aisément saisie à la main.
